# EUROPÄISCHE PATENTANMELDUNG

(11) **EP 1 811 404 A1**
(43) Veröffentlichungstag der Anmeldung: **25.07.2007**
(21) Anmeldenummer: 06001243.2
(22) Anmeldetag: 20.01.2006
(51) Int. Cl.: G06F 17/30

(54) **Technik zum Beliefern eines Data Warehouse unter Gewährleistung einer konsistenten Datensicht**

(71) Anmelder: UBS AG, 8001 Zürich (CH)
(72) Erfinder: Pagnussat, Daniel, CH - 8132 Egg (CH)
(74) Vertreter: Röthinger, Rainer

(57) **Zusammenfassung**

Es wird eine Technik zum Beliefern eines Data Warehouse unter Gewährleistung einer konsistenten Datensicht beschrieben. Das System umfasst eine Schnittstelle zum Empfangen von Datenelementen, die einzelnen Transaktionen zugeordnet und vor dem Einliefern in das Data Warehouse einer Verarbeitung bedürfen. Ferner ist eine Ablaufsteuerkomponente zum Analysieren der Datenelemente hinsichtlich der jeweiligen Zuordnung zu bestimmten Verarbeitungsvorgängen und zum Steuern der Verteilung der Datenelemente auf zugehörige Verarbeitungszweige vorgesehen. Stromabwärts der Ablaufsteuerkomponente ist wenigstens ein erster Zwischenspeicher zum temporären Abspeichern der verteilten Datenelemente angeordnet, wobei jedem gespeicherten Datenelement Zeitsteuerinformationen zugeordnet sind. Das Verarbeiten der aus dem wenigstens einen Zwischenspeicher ausgelesenen Datenelemente erfolgt in zwei oder mehr parallelen Verarbeitungszweigen, wobei in einem ersten Modus eine von den Zeitsteuerinformationen unabhängige Verarbeitung der Datenelemente erfolgt und in einem zweiten Modus eine auf den Zeitsteuerinformationen basierende priorisierende Verarbeitung bestimmter Datenelemente gewährleistet ist. Stromabwärts der Verarbeitungszweige ist eine Übergabekomponente angesiedelt, welche die verarbeiteten Datenelemente an das Data Warehouse übergibt.

## Beschreibung

### Gebiet der Erfindung

Die Erfindung betrifft allgemein das Beliefern eines Data Warehouse (auch "Datenlager" genannt) mit Transaktionsdaten. Die Erfindung ist insbesondere auf eine Belieferungstechnik gerichtet, die eine konsistente Sicht auf die im Date Warehouse gesammelten Daten gewährleistet.

### Hintergrund der Erfindung

Ein Data Warehouse bezeichnet allgemein eine zentrale Datensammlung (in der Regel eine Datenbank), deren Inhalt sich aus Daten mehrerer, häufig unterschiedlicher Datenquellen zusammensetzt. Die Daten werden zumeist aus Datenquellen in das Data Warehouse kopiert und dort vor allem für die Datenanalyse und zur Gewährleistung einer übergeordneten Datensicht langfristig gespeichert.

Der Erstellung eines Data Warehouse liegen zwei Leitgedanken zugrunde. Zum Ersten werden im Data Warehouse die Daten aus verteilten und häufig uneinheitlich strukturierten Datenbeständen integriert, um eine globale Sicht auf die Daten und eine darauf basierende übergeordnete Auswertung zu ermöglichen. Zum Zweiten gestattet die Verwendung eines Data Warehouse eine Trennung derjenigen Daten, die für operative Belange genutzt werden (beispielsweise im Rahmen von kurzlebigen Transaktionen), von solchen Daten, die im Data Warehouse für Zwecke des Berichtswesens, der übergeordneten Datenanalyse, usw. genutzt werden.

In der Vergangenheit erfolgten die Belieferungen eines Data Warehouse zumeist turnusmäßig, also beispielsweise in einem Batch-Prozess zum Monatsende. In den letzten Jahren hat sich mehr und mehr eine Abkehr von einer turnusmäßigen Belieferung hin zu einer Belieferung des Data Warehouse mehr oder weniger in Echtzeit vollzogen. Hintergrund dieser Entwicklung ist der Bedarf vieler Branchen nach sofort verfügbaren Datensammlungen unter Wahrung der Trennung von operativen (Daten erzeugenden) Systemen einerseits und auswertenden (Daten sammelnden) Systemen andererseits.

Moderne operative Systeme sind häufig als OLTP-Systeme ausgelegt. OLTP (On-Line Transaction Processing) bezeichnet einen Ansatz für die transaktionsbasierte Datenverarbeitung.

Unter einer Transaktion wird in diesem Zusammenhang eine Folge von logisch zusammenhängenden Einzelaktionen verstanden, die zu einer unteilbaren Einheit zusammengefasst sind. Charakteristisch für eine Transaktion ist, dass die in ihr zusammengefassten Einzelaktionen entweder in ihrer Gesamtheit oder überhaupt nicht ausgeführt werden. Des Weiteren können mehrere Transaktionen parallel ausgeführt werden, ohne dass es zu Wechselwirkungen zwischen ihnen kommt. Jede einzelne Transaktion läuft daher "isoliert" von den anderen Transaktionen ab.

Aufbauend auf dem Transaktionsparadigma ergeben sich für OLTP-Systeme gemeinsame Eigenschaften. Zu diesen gemeinsamen Eigenschaften gehört, dass OLTP-Systeme mehrbenutzerfähig sind. Im Rahmen des Mehrbenutzerbetriebs kann von unterschiedlichen Benutzern eine Vielzahl paralleler Transaktionen generiert werden. OLTP-Systeme sind derart ausgelegt, dass die Transaktionen (jedenfalls in der Wahrnehmung der Benutzer) in Echtzeit ablaufen. Außerdem sind die Transaktionen üblicherweise kurzlebig und typisiert, d.h. jedes OLTP-System stellt zumeist eine Reihe vordefinierter Transaktionstypen für unterschiedliche Verwendungen bereit.

Die zu einer Transaktion gehörenden Datenelemente bilden eine logische Einheit und können in einem einzigen Datensatz oder in miteinander verknüpften Datensätzen gehandhabt werden. Sofern alle für das Data Warehouse relevanten Datenelemente einer bestimmten Transaktion zusammen in das Data Warehouse eingeliefert werden, stellt das Data Warehouse eine bezüglich einzelner Transaktionen konsistente Sicht auf die darin enthaltenen Daten bereit. Eine solche transaktionskonsistente Sicht ist vor allem bei turnusmäßig vorgesehenen Belieferungen des Data Warehouse ohne Weiteres zu gewährleisten.

Problematischer ist jedoch der Fall, wenn das Data Warehouse (zumindest annähernd) in Echtzeit mit Transaktionsdaten beliefert werden soll. In diesem Fall ist eine transaktionsbezogene Konsistenz jedenfalls dann nicht mehr gegeben, wenn die zu einer bestimmten Transaktion gehörenden Datenelemente vor der Einlieferung in das Data Warehouse parallelen Verarbeitungszweigen zugeführt werden, weil häufig einzelne Verarbeitungszweige schneller als andere Verarbeitungszweige durchlaufen werden. Demgemäß würden die zu einer bestimmten Transaktion gehörenden Datenelemente in Abhängigkeit von dem jeweils durchlaufenen Verarbeitungszweig zu unterschiedlichen Zeitpunkten im Data Warehouse eintreffen. Dann wäre aber zu keinem Zeitpunkt mehr eine transaktionskonsistente Sicht auf die vom Data Warehouse bereitgestellten Daten gewährleistet.

Zur Lösung dieses Problems könnte grundsätzlich daran gedacht werden, die Verarbeitungsvorgänge in den einzelnen Verarbeitungszweigen transaktionsbezogen miteinander zu synchronisieren. In der Praxis hat sich jedoch herausgestellt, dass die hierfür erforderlichen Synchronisationsmechanismen nur mit vergleichsweise hohem Aufwand realisiert werden können.

Es könnte auch daran gedacht werden, die zu einer bestimmten Transaktion gehörenden Datenelemente stromabwärts der parallelen Verarbeitungszweige in einer Datenbank zu sammeln und dann gemeinsam in das Data Warehouse überzuführen. Die für die gemeinsame Überführung in das Data Warehouse erforderlichen JOIN-Operationen auf Datenbankebene erfordern jedoch einen hohen Rechenaufwand, insbesondere wenn man sich veranschaulicht, dass bei Großunternehmen wie Banken häufig tausend und mehr Transaktionen pro Sekunde ihren Niederschlag auch im Data Warehouse finden sollen.

Der Erfindung liegt die Aufgabe zugrunde, eine effiziente Technik zum zügigen Beliefern eines Data Warehouse mit Transaktionsdaten anzugeben, die einerseits ohne unverhältnismäßig hohen Aufwand realisiert werden kann und andererseits in der Lage ist, eine konsistente Datensicht anzubieten.

### Kurzer Abriss der Erfindung

Gemäß einem ersten Aspekt wird zur Lösung dieser Aufgabe ein System zum Beliefern eines Data Warehouse mit im Rahmen einer transaktionsbasierten Verarbeitung entstandenen Daten bereitgestellt, das eine konsistente Datensicht gewährleistet. Das System umfasst eine Schnittstelle zum Empfangen von Datenelementen, die einzelnen Transaktionen zugeordnet sind und vor dem Einliefern in das Data Warehouse einer Verarbeitung bedürfen, eine Ablaufsteuerkomponente zum Analysieren der Datenelemente hinsichtlich der Zuordnung zu bestimmten Verarbeitungsvorgängen und zum Steuern der Verteilung der Datenelemente auf zugehörige Verarbeitungszweige, wenigstens einen stromabwärts der Ablaufsteuerkomponente vorgesehenen ersten Zwischenspeicher zum temporären Abspeichern der verteilten Datenelemente, wobei jedem gespeicherten Datenelement Zeitsteuerinformationen zugeordnet sind, zwei oder mehr Verarbeitungszweige, in denen jeweils eine Verarbeitungskomponente zum Verarbeiten der aus dem wenigstens einen ersten Zwischenspeicher ausgelesenen Datenelemente vorgesehen ist, wenigstens eine Modus-Steuereinrichtung, die in einem ersten Modus eine von den Zeitsteuerinformationen unabhängige Verarbeitung der Datenelemente veranlasst und in einem zweiten Modus eine auf den Zeitsteuerinformationen basierende priorisierende Verarbeitung bestimmter Datenelemente gewährleistet, und eine stromabwärts der Verarbeitungszweige angeordnete Übergabekomponente, welche die verarbeiteten Datenelemente an das Data Warehouse übergibt. Optional kann noch eine Zeitgeberkomponente vorgesehen werden, welche die Zeitsteuerinformationen bereitstellt.

Mittels der wenigstens einen Modus-Steuereinrichtung kann im ersten Modus eine zügige Belieferung des Data Warehouse sichergestellt werden, während im zweiten Modus gewährleistet werden kann, dass das Data Warehouse zu einem gewissen Zeitpunkt eine transaktionskonsistente Datensicht bereitstellt. Die transaktionskonsistente Datensicht wird dadurch gewährleistet, dass auf Grund der den Datenelementen zugeordneten Zeitsteuerinformationen eine bestimmte Datenelemente priorisierende Verarbeitung und Belieferung des Data Warehouse möglich wird.

Die wenigstens eine Modus-Steuereinrichtung kann mit verschiedenen Systemkomponenten gekoppelt sein. Ist die wenigstens eine Modus-Steuereinrichtung beispielsweise mit den Verarbeitungskomponenten gekoppelt, so kann diese das Ausleseverhalten der Verarbeitungskomponenten hinsichtlich der Datenelemente steuern. Eine mögliche Realisierung dieses Konzepts könnte darin bestehen, dass den Verarbeitungskomponenten im ersten Modus Wahlfreiheit hinsichtlich der aus dem wenigstens einen ersten Zwischenspeicher ausgelesenen Datenelemente eingeräumt wird, während die Verarbeitungskomponenten im zweiten Modus selektiv Datenelemente auslesen (und verarbeiten), deren zugeordneten Zeitsteuerinformationen eine vorbestimmte Bedingung erfüllen.

Die Schnittstelle zum Empfangen der Datenelemente ist vorzugsweise mit einem operativen System gekoppelt. Das operative System kann als OLTP-System ausgebildet sein, um den Benutzern des operativen Systems Echtzeit-Dienste zur Verfügung zu stellen. Während die Ablaufsteuerkomponente stromabwärts der Schnittstelle angeordnet ist, kann stromaufwärts der Schnittstelle noch eine Transaktionssteuerkomponente vorgesehen werden. Bei der Transaktionssteuerkomponente handelt es sich vorzugsweise um eine OLTP-Komponente zur Transaktionssteuerung in Echtzeit.

Die Prozesse stromabwärts der Schnittstelle können asynchron bezüglich des Betriebs des OLTP-Systems erfolgen. Die Asynchronizität kann insbesondere aus dem temporären Abspeichern der Datenelemente resultieren. Um trotz der asynchronen Verarbeitung einen raschen Durchsatz der Datenelemente sowie eine zügige Belieferung des Data Warehouse (jedenfalls im ersten Modus) zu gewährleisten, kann das Verarbeiten in den vereinzelten Verarbeitungszweigen nach dem Prinzip des Straight-Through-Processing (STP) ablaufen.

Zusätzlich zu dem wenigstens einen ersten Zwischenspeicher, der zweckmäßigerweise zwischen der Ablaufsteuerkomponente und den Verarbeitungskomponenten angeordnet ist, kann wenigstens ein zweiter Zwischenspeicher zum temporären Abspeichern der verarbeiteten Datenelemente vorgesehen sein. Der zweite Zwischenspeicher ist daher stromabwärts der Verarbeitungszweige und vorzugsweise zwischen den Verarbeitungskomponenten und der Übergabekomponente vorgesehen. In diesem Fall kann die Übergabekomponente die verarbeiteten Datenelemente somit aus dem wenigstens einen zweiten Zwischenspeicher entnehmen und in das Data Warehouse überführen.

Gemäß einer ersten Variante ist für sämtliche Verarbeitungszweige ein gemeinsamer erster Zwischenspeicher und/oder ein gemeinsamer zweiter Zwischenspeicher vorgesehen. Gemäß einer zweiten Variante ist jedem Verarbeitungszweig ein separater erster Zwischenspeicher und/oder ein separater zweiter Zwischenspeicher zugeordnet. Die beiden Varianten lassen sich dahingehend kombinieren, dass einzelnen Verarbeitungszweigen des Systems separate Zwischenspeicher und anderen Verarbeitungszweigen des Systems gemeinsame Zwischenspeicher zugewiesen werden.

Hinsichtlich der Ausgestaltung der einzelnen Zwischenspeicher stehen unterschiedliche Möglichkeiten zur Verfügung. So kann daran gedacht werden, den ersten und/oder den zweiten Zwischenspeicher als Warteschlange auszubilden. Der erste und/oder zweite Zwischenspeicher kann jedoch auch als Batch-Datei implementiert werden. Gemäß einer dritten Möglichkeit fungiert eine Schnittstellen-Datenbank als erster und/oder zweiter Zwischenspeicher. Diese drei Möglichkeiten lassen sich beliebig untereinander kombinieren. So könnte beispielsweise daran gedacht werden, im ersten Modus eine Schnittstellen-Datenbank oder eine Warteschlange als Zwischenspeicher vorzusehen, während im zweiten Modus eine serielle Kombination aus Schnittstellen-Datenbank und Batch-Datei als Zwischenspeicher verwendet wird.

Den Datenelementen in dem wenigstens einen ersten und/oder zweiten Zwischenspeicher können Statusinformationen zugeordnet sein. Die Statusinformationen können verschiedene Zustände der Datenelemente kennzeichnen. So kann daran gedacht werden, mittels der Statusinformationen den Auslesestatus der Datenelemente zu markieren. Der Auslesestatus gibt beispielsweise an, ob ein bestimmtes Datenelement zum Zweck des Verarbeitens aus dem ersten Zwischenspeicher und/oder zum Zweck des Überführens in das Data Warehouse aus dem zweiten Zwischenspeicher ausgelesen wurde. Zusätzlich oder alternativ hierzu ist es denkbar, dass die Statusinformationen den Verarbeitungsstatus eines bestimmten Datenelements (z.B. verarbeitet/nicht verarbeitet) kennzeichnen.

Den Transaktionen und/oder den Datenelementen können numerische Identifikatoren zugeordnet sein. Die numerischen Identifikatoren können dazu verwendet werden, um die Datenelemente sortiert (z.B. nach aufsteigenden oder absteigenden numerischen Identifikatoren) in dem wenigstens einen ersten und/oder zweiten Zwischenspeicher bereitzustellen. Der numerische Identifikator findet dann beispielsweise als primärer Schlüssel einer Datenbanktabelle Verwendung.

Zur Erhöhung des Durchsatzes können Parallelverarbeitungstechniken eingesetzt werden. So wäre es denkbar, dass jeder Verarbeitungszweig mehrere separate Verarbeitungs-Threads umfasst. Einer Mehrzahl von Verarbeitungs-Threads pro Verarbeitungszweig kann ein gemeinsamer erster und/oder zweiter Zwischenspeicher zugeordnet sein.

Die Zuordnung der Zeitsteuerinformationen zu den einzelnen Datenelementen kann an verschiedenen Stellen erfolgen. Gemäß einer ersten Variante erfolgt die Zuordnung bei der Übergabe der Datenelemente an die eingangsseitige Systemschnittstelle. Gemäß einer zweiten Variante geschieht die Zuordnung nach dem Einstellen der verteilten Datenelemente in den ersten Zwischenspeicher. Eine dritte Variante sieht vor, die Ablaufsteuerkomponente mit der Zeitgeberkomponente zu koppeln, so dass die Zuordnung durch die Ablaufsteuerkomponente und vorzugsweise vor dem Einstellen der Datenelemente in den wenigstens einen ersten Zwischenspeicher erfolgen kann.

Die von der Ablaufsteuerkomponente vorgenommene Verteilung der Datenelemente kann bei einer Mehrzahl von ersten Zwischenspeichern einfach dadurch erfolgen, das ein bestimmtes zu verarbeitendes Datenelement in denjenigen ersten Zwischenspeicher eingestellt wird, der dem zum Datenelement gehörenden Verarbeitungszweig zugeordnet ist. Ist hingegen ein gemeinsamer Zwischenspeicher für mehrere Verarbeitungszweige vorgesehen, kann die Ablaufsteuerkomponente jedem abgespeicherten Datenelement Informationen zuordnen, die einen bestimmten Verarbeitungszweig kennzeichnen.

Hinsichtlich der Transaktionen und/oder Datenelemente kann die Ablaufsteuerkomponente eine Validierungsfunktionalität besitzen. Durch eine eingangsseitige Validierung wird gewährleistet, dass nur fehlerfreie Transaktionen und/oder Datenelemente ihren Niederschlag im Data Warehouse finden werden. Sofern es sich bei der Transaktionssteuerkomponente um eine OLTP-Komponente handelt, findet im Rahmen der Validierung die Kommunikation zwischen der Ablaufsteuerkomponente und der Transaktionssteuerkomponente zweckmäßigerweise (zumindest in der Wahrnehmung eines Benutzers) in Echtzeit ab.

Gemäß einem weiteren Aspekt wird ein Verfahren zum Beliefern eines Data Warehouse mit im Rahmen einer transaktionsbasierten Verarbeitung entstandenen Daten unter Gewährleistung einer konsistenten Datensicht bereitgestellt. Das Verfahren umfasst ein Empfangen von Datenelementen, die einzelnen Transaktionen zugeordnet sind und vor dem Einliefern in das Data Warehouse einer Verarbeitung bedürfen, ein Analysieren der Datenelemente hinsichtlich der Zuordnung zu bestimmten Verarbeitungsvorgängen und ein Steuern der Verteilung der Datenelemente auf zugehörige Verarbeitungszweige, ein temporäres Abspeichern der verteilten Datenelemente, wobei jedem abgespeicherten Datenelement Zeitsteuerinformationen zugeordnet sind, ein Verarbeiten der abgespeicherten Datenelemente in dem jeweils zugehörigen Verarbeitungszweig, wobei in einem ersten Modus eine von den Zeitsteuerinformationen unabhängige Verarbeitung der Datenelemente erfolgt und in einem zweiten Modus eine auf den Zeitsteuerinformationen basierende priorisierende Verarbeitung bestimmter Datenelemente erfolgt, und ein Übergeben der verarbeiteten Datenelemente an das Data Warehouse.

Gemäß einer Weiterbildung dieses Ansatzes werden im zweiten Modus solche Datenelemente priorisiert verarbeitet, deren zugeordnete Zeitsteuerinformationen einen zeitlichen Schwellenwert nicht überschreiten. Dieser Ansatz gewährleistet, dass "ältere" Datenelemente bevorzugt verarbeitet und in das Data Warehouse übergeführt werden, während die Verarbeitung "neuerer" Datenelemente zurückgestellt werden kann. In einem solchen Fall ist eine gewisse Zeit nach dem Umschalten auf den zweiten Modus davon auszugehen, dass keine "älteren" Datenelemente mehr zwischengespeichert und/oder verarbeitet werden. Dieser Sachverhalt kann erforderlichenfalls durch Überprüfen der zwischengespeicherten Datenelementen zugeordneten Zeitsteuerinformationen und/oder Statusinformationen überprüft werden. Dem Data Warehouse wird somit eine transaktionskonsistente Datensicht per dem zeitlichen Schwellenwert ermöglich. Mit anderen Worten kann zur Gewährleistung einer konsistenten Datensicht ein Umschalten vom ersten Modus in den zweiten Modus erfolgen. Andererseits kann zur Gewährleistung einer zügigen Belieferung des Data Warehouse ein Umschalten vom zweiten Modus in den ersten Modus zweckmäßig sein. In diesem Fall genießt die zügige Belieferung des Data Warehouse unter Umständen zeitweilig Vorrang vor einer transaktionskonsistenten Datensicht. Das Umschalten zwischen dem ersten Modus und dem zweiten Modus erfolgt gemäß einer ersten Option zeitgesteuert. Gemäß einer zweiten Option kann das Umschalten aber auch ereignisgesteuert, benutzergesteuert oder anderweitig erfolgen.

Ein bevorzugter Anwendungsbereich der hier vorgestellten Belieferungstechnik für ein Data Warehouse ist ein Buchungsvorgänge umfassendes Verarbeiten der Datenelemente. So kann ein erster Verarbeitungszweig für Geldbuchungen und ein zweiter Verarbeitungszweig für Titelbuchungen vorgesehen sein. Zusätzliche Verarbeitungszweige können erforderlichenfalls hinzugefügt werden.

Die Erfindung kann in Form von Hardware, in Form von Software oder als eine Hardware/Software-Kombination realisiert werden. Gemäß einem Software-Aspekt wir ein Computerprogrammprodukt mit Programmcodemitteln zum Durchführen des Belieferungsverfahrens, wenn das Computerprogrammprodukt auf einem oder mehreren Computern ausgeführt wird, bereitgestellt. Das Computerprogrammprodukt kann auf einem computerlesbaren Datenträger abgespeichert sein.

### Kurze Beschreibung der Zeichnungen

Weitere Einzelheiten, Vorteile und Eigenschaften der Erfindung ergeben sich aus der nachfolgenden Beschreibung bevorzugter Ausführungsbeispiele sowie aus den Figuren. Es zeigen:
- Fig. 1: ein Flussdiagramm eines Verfahrens zum Beliefern eines Data Warehouse gemäß einem Ausführungsbeispiel der vorliegenden Erfindung;
- Fig. 2: ein schematisches Blockdiagramm hinsichtlich der Kopplung verschiedener Verarbeitungsdomänen;
- Fig. 3: eine schematische Darstellung eines Ausführungsbeispiels eines erfindungsgemäßen Belieferungssystems;
- Fig. 4: eine schematische Darstellung eines für ein Datenelement angelegten Datensatzes; und
- Fig. 5: eine schematische Darstellung eines weiteren Ausführungsbeispiels eines erfindungsgemäßen Belieferungssystems.

### Beschreibung bevorzugter Ausführungsbeispiele

Im Folgenden werden einige bevorzugte Ausführungsbeispiele für das Beliefern eines Data Warehouse mit im Rahmen einer transaktionsbasierten Verarbeitung entstandenen Daten unter Gewährleistung einer konsistenten Datensicht erläutert. Die Ausführungsbeispiele sind untereinander kombinierbar.

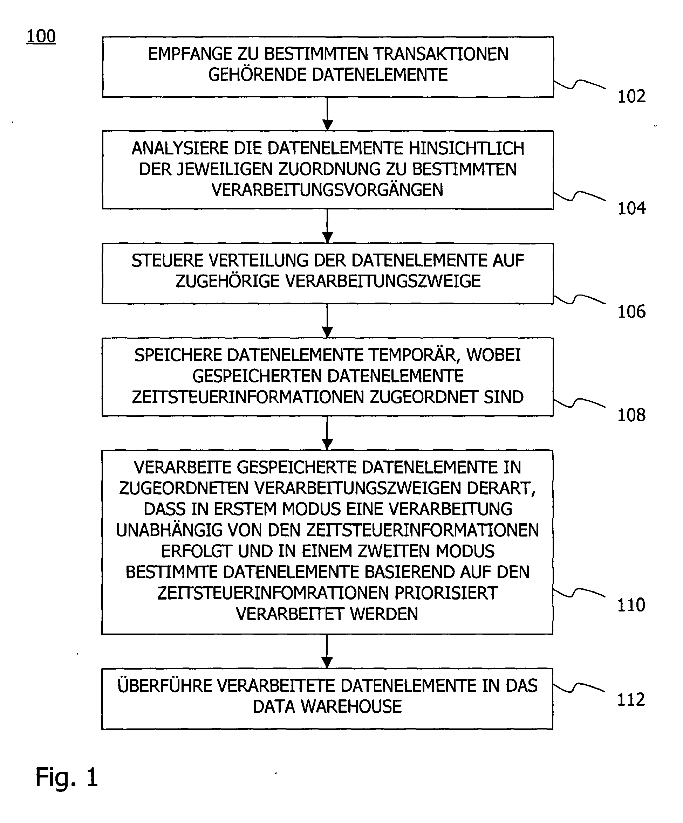

Fig. 1 zeigt in einem schematischen Flussdiagramm 100 ein Ausführungsbeispiel eines Verfahrens zum Beliefern eines Data Warehouse.

In einem ersten Schritt 102 werden Datenelemente empfangen, die einzelnen Transaktionen zugeordnet sind. Dabei kann einer einzelnen Transaktion lediglich ein einzelnes Datenelement oder aber eine Mehrzahl von Datenelementen zugeordnet sein.

In einem nächsten Schritt 104 wird für jedes Datenelement die jeweilige Zuordnung zu einem bestimmten Verarbeitungsvorgang bestimmt. Zu diesem Zweck kann das Datenelement selbst oder die dem Datenelement zugeordnete Transaktion analysiert werden. Sind einer Transaktion mehrere Datenelemente zugeordnet, können die Datenelemente demselben Verarbeitungsvorgang oder aber unterschiedlichen Verarbeitungsvorgängen zu unterziehen sein.

Im Anschluss an das Bestimmen einer Zuordnung zwischen Datenelementen und Verarbeitungsvorgängen wird die Verteilung der Datenelemente auf zugehörige Verarbeitungszweige gesteuert (Schritt 106). Jeder Verarbeitungszweig beinhaltet einen bestimmten Verarbeitungsvorgang. Die einzelnen Verarbeitungszweige verlaufen im Wesentlichen parallel zueinander und können mit unterschiedlichen Verarbeitungsdauern (und damit auch unterschiedlichen Durchlaufzeiten) verbunden sein. Werden also beispielsweise die zu einer bestimmten Transaktion gehörenden Datenelemente in unterschiedlichen Verarbeitungszweigen verarbeitet, werden die verarbeiteten Datenelemente die Verarbeitungszweige zu unterschiedlichen Zeiten verlassen.

Allgemein kann der Schritt 106 auf unterschiedliche Art und Weise implementiert werden. So kann beispielsweise daran gedacht werden, die Verteilungssteuerung dadurch zu bewerkstelligen, dass jedem Datenelement Verteilungsinformationen zugeordnet werden. Die Verteilungsinformationen können einen bestimmten Verarbeitungszweig kennzeichnen. Die mit den Verteilungsinformationen verknüpften Datenelemente können dann in einem Schritt 108 temporär zwischengespeichert werden. Gemäß einer weiteren Implementierung kann die Verteilungssteuerung derart erfolgen, dass die Datenelemente (in Schritt 108) in unterschiedlichen Speicherbereichen temporär zwischengespeichert werden, wobei jedem Speicherbereich ein bestimmter Verarbeitungszweig zugeordnet ist.

Den zwischengespeicherten Datenelementen sind Zeitsteuerinformationen zugeordnet. Die Zeitsteuerinformationen können beispielsweise in Gestalt eines Zeitstempels realisiert werden. Zweckmäßigerweise erfolgt die Zuordnung der Zeitsteuerinformationen zu den Datenelementen in einem der Schritte 102, 104, 106 oder 108.

Die in Schritt 108 temporär zwischengespeicherten Datenelemente werden in einem nachfolgenden Schritt 110 zur Verarbeitung in den zugeordneten Verarbeitungszweigen ausgelesen. Für das Auslesen und/oder Verarbeiten können zwei oder mehr Modi vorgesehen sein. Die Modi umfassen zumindest einen ersten Modus, in dem eine Verarbeitung der Datenelemente unabhängig von den Zeitsteuerinformationen erfolgt, und einen zweiten Modus, in dem bestimmte Datenelemente basierend auf den Zeitsteuerinformationen priorisiert verarbeitet werden. Die priorisierte Verarbeitung kann durch eine Priosierung des Auslesens bestimmter temporär gespeicherter Datenelemente bewerkstelligt werden. Ein Umschalten zwischen dem ersten Modus und dem zweiten Modus erfolgt im vorliegenden Ausführungsbeispiel zeitgesteuert, um zu vorgegebenen Zeitpunkten eine konsistente Datensicht zu gewährleisten.

Zweckmäßigerweise erfolgt die Zuordnung der Zeitsteuerinformationen zu den einzelnen Datenelementen derart, dass den zu einer einzigen Transaktion gehörenden Datenelemente alle dieselbe Zeitsteuerinformationen (z.B. derselbe Zeitstempel) zugeordnet werden. Diese Vorgehensweise unterstützt im zweiten Modus das bevorzugte Verarbeiten "zusammengehörender" Datenelemente und unterstützt somit eine transaktionskonsistente Datensicht.

Im Anschluss an das Verarbeiten der einzelnen Datenelemente in den parallelen Verarbeitungszweigen erfolgt in Schritt 112 eine Überführung der verarbeiteten Datenelemente in das Data Warehouse.

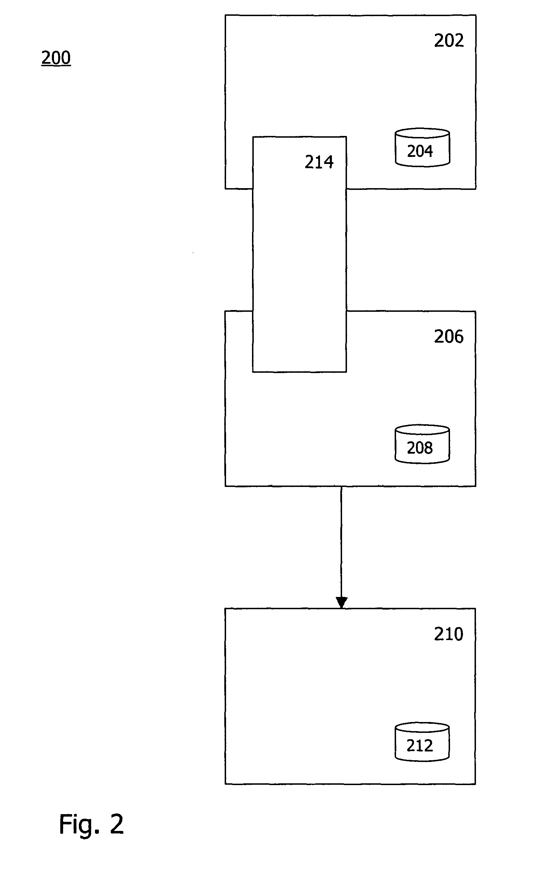

Als nächstes wird unter Bezugnahme auf Fig. 2 ein Ausführungsbeispiel erläutert, dass schematisch die Verkettung verschiedener Verarbeitungsumgebungen oder Verarbeitungsdomänen zeigt.

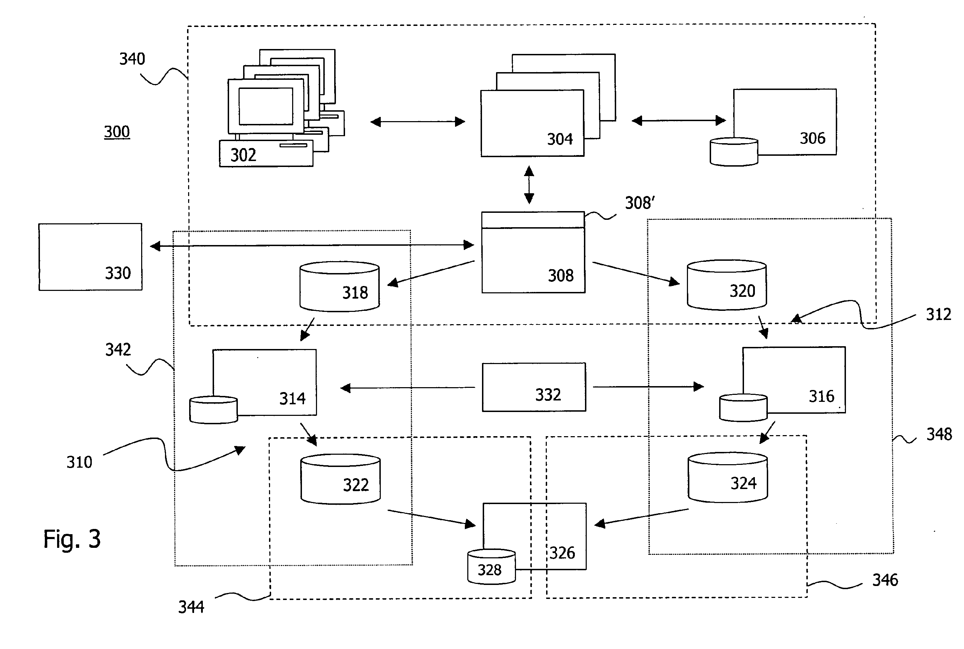

Ein System 200 gemäß Fig. 2 umfasst eine OLTP-Verarbeitungsumgebung 202 mit einer oder mehreren operativen Datenbanken 204, eine auf dem Prinzip des STP basierende Verarbeitungsumgebung 206 mit einer oder mehreren zugehörigen Datenbanken 208 sowie eine auf dem Prinzip des On-Line Analytical Processing (OLAP) basierende Verarbeitungsumgebung 210. Die OLAP-Verarbeitungsumgebung 210 beinhaltet ein Data Warehouse 212, das im Ausführungsbeispiel eine Datenbank ist. Eine Ablaufsteuerkomponente 214 überbrückt die OLTP-Verarbeitungsumgebung 202 und die STP-Verarbeitungsumgebung 206. Demgemäß besitzt die Ablaufsteuerkomponente 214 sowohl OLTP- als auch STP-Funktionalitäten. Dies wird im Folgenden anhand der ausführlicheren Systemdarstellung gemäß Fig. 3 näher erläutert.

Fig. 3 zeigt die verschiedenen Komponenten eines Systems 300 zum Erzeugen von Transaktionsdaten, zum Verarbeiten der erzeugten Transaktionsdaten im Rahmen von STP-Vorgängen sowie zum Beliefern eines Data Warehouse mit den STPverarbeiteten Daten.

In einer in Fig. 3 nicht hervorgehobenen OLTP-Verarbeitungsumgebung sind eine Mehrzahl von Benutzerendgeräten 302, mehrere Transaktionssteuerkomponenten 304 sowie wenigstens eine operative Datenbankkomponente 306 vorgesehen. Im Zusammenspiel zwischen den Benutzerendgeräten 302 und den Transaktionssteuerkomponenten 304 werden einzelne Transaktionen imitiert, durchgeführt und abgeschlossen. Die Transaktionssteuerkomponenten 304 koordinieren dabei die konsistente Transaktionsverarbeitung und sind für eine bestimmte Transaktion während der gesamten Transaktionslebensdauer verantwortlich. Die Transaktionssteuerkomponenten 304 sind jederzeit über den aktuellen Status einer bestimmten Transaktion informiert. Jede abgeschlossene Transaktion findet ihren Niederschlag in der operativen Datenbankkomponente 306.

Mittels der Benutzerendgeräte 302 können verschiedene Transaktionstypen imitiert werden. Für jeden Transaktionstyp ist eine separate Transaktionssteuerkomponente 304 vorgesehen. Aus Benutzersicht laufen die Transaktionen in der OLTP-Umgebung in Echtzeit ab.

Eine Ablaufsteuerkomponete 308 mit einer eingangsseitigen Schnittstelle 308' erstreckt sich in die OLTP-Verarbeitungsumgebung hinein und besitzt Funktionalitäten hinsichtlich der Validierung von Datenelementen, die im Rahmen der Transaktionen entstehen. Zu diesen Zweck kommuniziert die Ablaufsteuerkomponente 308 mit den Transaktionssteuerkomponenten 304 in Echtzeit. Dies ermöglicht eine Online-Benachrichtigung eines Benutzerterminals 302 im Fall einer negativen Validierung. Weiterhin stellt die von der Ablaufsteuerkomponente 308 durchgeführte Validierung sicher, dass nur positiv validierte Datenelemente einer Weiterverarbeitung in der sich anschließenden STP-Verarbeitungsumgebung (in Figur 3 nicht hervorgehoben) zugeführt werden.

Eine weitere Aufgabe der Ablaufsteuerkomponente 308 besteht darin, die transaktionsbasierte Echtzeit-Verarbeitung der Datenelemente in der OLTP-Verarbeitungsumgebung von der weiteren Verarbeitung der Datenelemente in der stromabwärts der Ablaufsteuerkomponente 308 angesiedelten STP-Umgebung zu entkoppeln. Die Weiterverarbeitung der Datenelemente in der STP-Umgebung erfolgt dann asynchron bezüglich der Echtzeit-Verarbeitung in der OLTP-Umgebung.

Die STP-Umgebung beinhaltet gemäß dem Ausführungsbeispiel von Figur 3 zwei parallele Verarbeitungszweige 310, 312. In jedem Verarbeitungszweig 310, 312 ist eine Verarbeitungskomponente 314, 316 mit einer zugehörigen lokalen Datenbank vorgesehen. Jeder der beiden Verarbeitungszweige 310, 312 umfasst im Ausführungsbeispiel als Zwischenspeicher eine zugeordnete eingangsseitige Schnittstellen-Datenbank 318, 320 sowie eine zugeordnete ausgangsseitige Schnittstellen-Datenbank 322, 324. Die eingangsseitigen Schnittstellen-Datenbanken 318, 320 sind jeweils zwischen der Ablaufsteuerkomponente 308 und der Verarbeitungskomponente 314, 316 jedes Verarbeitungszweigs 310, 312 vorgesehen. Die ausgangsseitigen Schnittstellen-Datenbanken 322, 324 sind hingegen zwischen der Verarbeitungskomponente 314, 316 des jeweiligen Verarbeitungszweigs 310, 312 und einer OLAP-Komponente 326 mit einem Data Warehouse in Gestalt einer Datenbank 328 vorgesehen.

Das in Fig. 3 dargestellte System 300 umfasst des Weiteren eine Zeitgeberkomponente 330, die Zeitsteuerinformationen bereitstellt, sowie eine den einzelnen Verarbeitungszweigen 310, 312 gemeinsam zugeordnete Modus-Steuereinrichtung 332. Die Modus-Steuereinrichtung 332 steuert die in den Verarbeitungszweigen 310, 312 angeordneten Verarbeitungskomponenten 314, 316 wie weiter unten ausführlicher erläutert werden wird. Abweichend von dem in Fig. 3 dargestellten Szenario könnte jedem Verarbeitungszweig 310, 312 eine eigene Modus-Steuereinrichtung zugeordnet werden. Die einzelnen Modus-Steuereinrichtungen können dann bezüglich der Modiwechsel miteinander synchronisiert werden.

Im Folgenden wird die Funktionsweise des in Fig. 3 dargestellten Systems 300 näher erläutert.

Wurden die für eine bestimmte Transaktion zu validierenden Datenelemente von der Ablaufsteuerkomponente 308 positiv validiert, analysiert die Ablaufsteuerkomponente 308 sämtliche zu einer bestimmte Transaktion gehörenden Datenelemente hinsichtlich des jeweiligen Datenelementtyps. Im vorliegenden Ausführungsbeispiel sind zwei Datenelementtypen definiert. Ein erster Datenelementtyp ist dem Verarbeitungszweig 310 bzw. der Verarbeitungskomponente 314 zugeordnet und ein zweiter Datenelementtyp ist dem Verarbeitungszweig 312 bzw. der Verarbeitungskomponente 316 zugeordnet.

Nachdem von der Ablaufsteuerkomponente 308 der einem bestimmten Datenelement zugeordnete Verarbeitungszweig 310, 312 identifiziert wurde, wird das jeweilige Datenelement in die eingangsseitige Schnittstellen-Datenbank 318, 320 des zugeordneten Verarbeitungszweigs 310, 312 eingestellt. Vor dem Einstellen des Datenelements in die zugehörige Schnittstellen-Datenbank 318, 320 ordnet die Ablaufsteuerkomponente 308 dem Datenelement Zeitsteuerinformationen in Gestalt eines Zeitstempels zu. Die Ablaufsteuerkomponente 308 bezieht die Zeitsteuerinformationen von der Zeitgeberkomponente 330. Die Zuordnung der Zeitsteuerinformationen erfolgt im Ausführungsbeispiel derart, dass sichergestellt wird, dass sämtlichen Datenelementen einer bestimmten Transaktion dieselben Zeitsteuerinformationen (derselbe Zeitstempel) zugeordnet wird.

Die Verarbeitungskomponenten 314, 316 lesen die in den eingangsseitigen Schnittstellen-Datenbanken 318, 320 enthaltenen Datenelemente fortlaufend (oder Batch-weise) aus und verarbeiten die Datenelemente gemäß den Gegebenheiten des jeweiligen Verarbeitungszweigs 310, 312. Das Auslesen der Datenelemente seitens der Verarbeitungskomponenten 314, 318 erfolgt in Abhängigkeit des von der Modus-Steuereinrichtung 332 signalisierten Auslesemodus. In einem ersten Auslesemodus besitzen die Verarbeitungskomponenten 314, 316 eine bestimmte Wahlfreiheit hinsichtlich der aus den Schnittstellen-Datenbanken 318, 320 auslesbaren Datenelemente. Diese Wahlfreiheit resultiert daraus, das die Verarbeitungskomponenten 314, 318 beim Auslesevorgang die dem auszulesenden Datenelemente zugeordneten Zeitsteuerinformationen nicht berücksichtigen. Signalisiert die Modus-Steuerkomponente 332 hingegen einen zweiten Auslesemodus, lesen die Verarbeitungskomponenten 314, 316 zunächst ausschließlich solche Datenelemente aus den Schnittstellen-Datenbanken 318, 320 aus, deren zugeordnete Zeitsteuerinformationen eine vorbestimmte zeitliche Bedingung erfüllen. Diese vorbestimmte zeitliche Bestimmung kann ebenfalls von der Modus-Steuereinrichtung 332 signalisiert. In dem erläuterten Ausführungsbeispiel sind genau zwei unterschiedliche Modi definiert. Es wäre jedoch denkbar, zusätzlich zu diesen beiden Modi noch weitere Modi zu definieren.

Im Ausführungsbeispiel ist die von der Modus-Steuereinrichtung 332 im zweiten Modus signalisierte zeitliche Bestimmung darauf gerichtet, dass Datenelemente, deren zugeordnete Zeitsteuerinformationen älter als ein vorbestimmter Zeitschwellenwert sind, nicht ausgelesen werden dürfen. Auf diese Weise kann erreicht werden, das die eingangsseitigen Schnittstellen-Datenbanken 318, 320 nach einer bestimmten Anzahl von Auslesevorgängen nur noch Datenelemente enthalten, denen Zeitsteuerinformationen zugeordnet sind, die älter als der zeitliche Schwellenwert sind. Datenelemente, denen Zeitsteuerinformationen zugeordnet sind, die dem zeitlichen Schwellenwert entsprechen oder älter als der zeitliche Schwellenwert sind, werden hingegen von den Verarbeitungskomponenten 314, 316 priorisiert verarbeitet. Auf diese Weise wird erreicht, dass nach Ablauf einer gewissen Zeitspanne das nachgelagerte Data Warehouse 328 eine transaktionskonsistente Datensicht per zeitlichem Schwellenwert bereitstellt.

Im Anschluss an die Verarbeitung der aus den eingangsseitigen Schnittstellen-Datenbanken 318, 320 ausgelesenen Datenelemente werden die von den Verarbeitungskomponenten 314, 318 verarbeiteten Datenelemente in die ausgangsseitigen Schnittstellen-Datenbanken 322, 324 eingestellt. Weiterhin können basierend auf den Verarbeitungsvorgängen die lokalen Datenbanken der Verarbeitungskomponenten 314, 316 aktualisiert werden.

Die OLAP-Komponente 326 liest die in die ausgangsseitigen Schnittstellen-Datenbanken 322, 324 eingestellten verarbeiteten Datenelemente fortlaufend oder in Batch-Prozessen aus, um die verarbeiteten Datenelemente in das Data Warehouse zu überführen.

Für die einzelnen im Zusammenhang mit Fig. 3 erläuterten Verarbeitungsvorgänge können fünf logische Transaktionsaktionsklammern definiert werden. Die zu einer bestimmten Transaktionsklammer gehörenden Komponenten bzw. die von diesen Komponenten ausgeführten Schritte sind in Fig. 3 durch gestrichelte bzw. gepunktete Rechtecke 340, 342, 344, 346, 348 angedeutet. Jede Transaktionsklammer kennzeichnet eine logisch zusammengehörende Aktionsfolge. Wird eine der Aktionen während ihrer Ausführung abgebrochen, werden alle anderen Aktionen innerhalb derselben Transaktionsklammer auf ihren ursprünglichen Zustand zurückgesetzt.

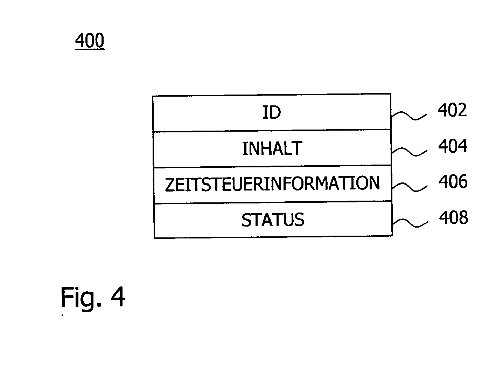

In Fig. 4 ist beispielhaft die Struktur eines für ein bestimmtes Datenelement in die eingangsseitigen Schnittstellen-Datenbanken 318, 320 eingestellten Datensatzes 400 dargestellt. Der Datensatz 400 umfasst einen numerischen Identifikator 402 des Datenelements, der gleichzeitig den primären Schlüssel einer Datenbanktabelle bildet. Bei dem Identifikator 402 kann es sich um einen systemweit einmaligen Identifikator handeln, der basierend auf Datums-, Uhrzeit- und Systemplattforminformationen erzeugt wurde. Der Identifikator 402 kann eine bestimmte Transaktion eindeutig kennzeichnen und somit die Zuordnung einzelner Datenelemente zu der bestimmten Transaktion ermöglichen.

Der Datensatz 400 umfasst außerdem den von der je zugehörigen Verarbeitungskomponente 314, 316 zu verarbeitenden Inhalt 404 des Datenelements sowie Zeitsteuerinformationen 406. Die Zeitsteuerinformationen 406 wurden von der Ablaufsteuerkomponente 308 basierend auf den von der Zeitgeberkomponente 330 bereitgestellten Informationen vergeben.

Schließlich beinhaltet der für ein bestimmtes Datenelement in den eingangsseitigen Schnittstellen-Datenbanken 318, 320 angelegte Datensatz 400 noch wenigstens ein Statusfeld 408, in dem Statusinformationen hinsichtlich des betreffenden Datenelements nachgeführt werden. Die Statusinformationen können von der Ablaufsteuerkomponente 308, den Verarbeitungskomponenten 314, 316 und/oder der OLAP-Komponente 326 nachgeführt werden. Ein erster Status (oder ein erstes Statusfeld) kann dazu verwendet werden, um die Übergabe eines (positiv validierten) Datenelements von der Transaktionssteuerkomponenten 304 an die Ablaufsteuerkomponente 308 zu signalisieren. Ein zweiter Status (oder ein zweites Statusfeld) kann das Auslesen eines Datenelements seitens einer der Verarbeitungskomponenten 314, 316 kennzeichnen. Ein dritter Status (oder ein drittes Statusfeld) schließlich kann die Abnahme des verarbeiteten Datenelements durch die OLAP-Komponente 326 markieren.

Datensätze mit der in Fig. 4 dargestellten Struktur können auch in den ausgangsseitigen Schnittstellen-Datenbanken 322, 324 vorgesehen werden. In diesem Fall wird der Inhalt 404 von dem verarbeiteten Datenelement-Inhalt gebildet. Die Zeitsteuerinformationen 406 können erforderlichenfalls fortgelassen werden.

Die Datensätze 400 können in den Schnittstellen-Datenbanken 318, 320, 322, 324 in jeweils einer Tabelle oder in mehreren miteinander verknüpften Tabellen abgespeichert werden. Jeder Datensatz wird zweckmäßigerweise in Gestalt einer Tabellenreihe mit dem Status "zu Verarbeiten" in die jeweilige Datenbank eingestellt. Beim Auslesen erfolgt eine Statusaktualisierung hin zu "verarbeitet". Der primäre Schlüssel jeder Tabellenreihe enthält den numerischen Identifikator 402. Die Reihen können demzufolge mit ansteigenden Identifikatoren 402 angelegt werden (ohne dass die Identifikatoren notwendigerweise fortlaufend sein müssten).

Das oben erläuterte Statuskonzept ermöglicht den auslesenden Verarbeitungskomponenten 314, 316 bzw. der auslesenden OLAP-Komponente 326 eine Feststellung, ob ein bestimmtes Datenelement bereits ausgelesen (und verarbeitet) wurde oder aber noch auszulesen (und zu verarbeiten) ist. Dies ermöglicht im oben erläuterten zweiten Modus eine Überprüfung, ob alle Datenelemente per zeitlichem Schwellenwert in das Data Warehouse 328 übergeführt wurden, d.h. ob das Data Warehouse 328 nun eine transaktionskonsistente Datensicht bereitstellt. Das Statuskonzept ist auch dann hilfreich, wenn jeder Verarbeitungszweig 310, 312 mehrere parallele Verarbeitungs-Threads umfasst, die jeweils auf eine gemeinsame eingangsseitige Schnittstellen-Datenbank 318, 320 zugreifen.

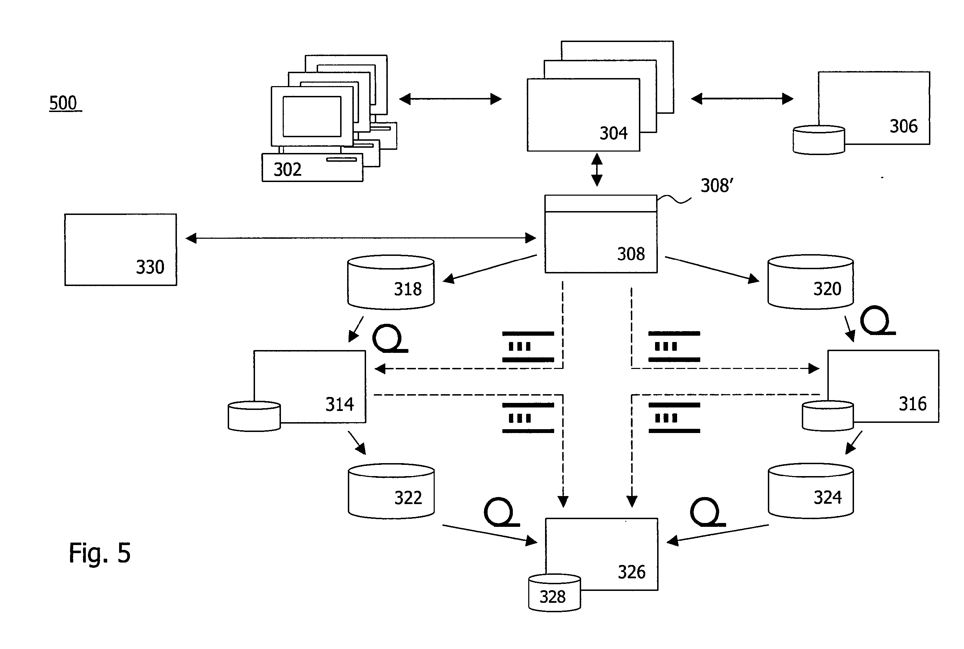

In dem Ausführungsbeispiel gemäß Fig. 3 wurden Schnittstellen-Datenbanken 318, 320, 322, 324 zum Zwischenspeichern der Datenelemente vor bzw. nach der Weiterverarbeitung durch die Verarbeitungskomponenten 314, 316 verwendet. Gemäß dem in Fig. 5 dargestellten System 500 erfolgt in einem weiteren Ausführungsbeispiel die Übergabe der Datenelemente durch Warteschlangen und/oder Batch-Files. Die Warteschlangen können hierbei parallel zu den Schnittstellen-Datenbanken 318, 320, 322, 324 oder alternativ hierzu vorgesehen werden. Das gleiche gilt für den Transport der Datenelemente mittels Batch-Dateien. Das Auslesen der Datenelemente aus den Schnittstellen-Datenbanken 318, 320, 322, 324 kann einzeln erfolgen. Alternativ hierzu können die in die Schittstellen-Datenbanken 318, 320, 322, 324 eingestellten Datenelemente aber auch Batch-weise ausgelesen werden.

Die unter Bezugnahme auf die Figuren 1 bis 5 erläuterten Ausführungsbeispiele lassen sich in verschiedenen Bereichen vorteilhaft einsetzen. Ein bevorzugter Einsatzbereich sind Banken. Eine mögliche Implementierung der Ausführungsbeispiele für den Bankbereich wird nunmehr unter exemplarischer Bezugnahme auf das Ausführungsbeispiel gemäß Figur 3 näher erläutert.

Im Rahmen der auf den Bankenbereich bezogenen Ausführungsform handelt es sich bei den Transaktionssteuerkomponenten 304 um Buchungsanwendungen, die die konsistente Verarbeitung von Transaktionen in Gestalt von Geschäftsvorgängen koordinieren. Hierbei kommunizieren die Transaktionssteuerkomponenten 304 mit den Benutzerendgeräten 302 oder externen Anwendungsschnittstellen (nicht dargestellt). Eine erste Transaktionssteuerkomponente 304 kann beispielsweise für das Abwickeln von Wertpapiertransaktionen vorgesehen sein, während eine zweite Transaktionssteuerkomponente 304 Kontoüberweisungen handhaben kann. Nach Abschluss einer auf einem Geschäftsvorgang gerichteten Transaktion werden die entsprechenden Daten des Geschäftsvorgangs von der operativen Datenbankkomponente 306 abgespeichert.

Die Ablaufsteuerkomponente 308 fungiert hinsichtlich der abzuwickelnden Transaktionen als zentrale Validierungsstelle. Die Ablaufsteuerkomponente 308 validiert in diesem Zusammenhang die in Gestalt von Buchungen empfangenen Datenelemente gemäß vordefinierten Validierungsregeln. Die validierten Buchungen werden anschließend an ein internes Buchungssystem (nicht dargestellt) weitergegeben. Kopien der Buchungen werden außerdem den Verarbeitungszweigen 310, 312 zugeführt. Der Verarbeitungszweig 310 ist hierbei für Geldbuchungen (Cash) und der Verarbeitungszweig 312 für Titelbuchungen (Securities) zuständig. Die entsprechenden Buchungsvorgänge werden von den Verarbeitungskomponenten 314, 316 abgewickelt und in den lokalen Datenbanken dieser Komponenten geführt. Die verarbeiteten Buchungen werden anschließend in das Data Warehouse 328 übergeführt.

Im Ausführungsbeispiel handelt es sich bei jedem Datenelement entweder um eine Geldbuchung oder um eine Titelbuchung. Manche Transaktionen (wie beispielsweise Wertpapiertransaktionen) beinhalten sowohl eine Geldbuchung als auch eine Titelbuchung, während andere Transaktionen (beispielsweise Kontoüberweisungen) in der Regel nur eine Geldbuchung beinhalten. Die Ablaufsteuerkomponente 304 identifiziert den Typ eines Datenelements (Buchungstyp) und leitet eine Kopie der Buchung in Abhängigkeit von dem Validierungsergebnis an die Verarbeitungskomponente für Geld 314 oder die Verarbeitungskomponente für Titel 316 weiter. Hierbei wird von den bereits oben erläuterten Schnittstellen-Datenbanken 318, 320, 322, 324 (und/oder Warteschlangen und/oder Batch-Dateien) Gebrauch gemacht.

Im Anschluss an die Verbuchung durch eine der Verarbeitungskomponenten 314, 316 werden die entsprechend verarbeiteten Buchungen auf die oben erläuterte Weise an die OLAP-Komponente 326 weitergegeben und dem Data Warehouse 328 zugeführt. Die OLAP-Komponente 326 beinhaltet eine Anwendung, die basierend auf dem Inhalt des Data Warehouse 328 unterschiedliche Datensichten ("views") bezüglich sämtlicher vorhandener Konten bereitstellt. Bei der OLAP-Komponente handelt es sich (in Gegensatz zu den Komponenten 314 und 316) somit nicht um eine Verarbeitungskomponente, sondern um eine Sammelkomponente. Die OLAP-Komponente 326 stellt konsolidierte Datensichten hinsichtlich der geführten Konten und hinsichtlich Kontogruppen zur Verfügung.

Die Ablaufsteuerkomponente 308 bezieht von der Zeitgeberkomponente 330 Zeitsteuerungsinformationen in Gestalt eines Buchungstags. Jede in die eingangsseitigen Schnittstellen-Datenbanken 318, 320 eingestellte Buchung wird mit dem aktuellen Buchungstag verknüpft. Zu einem vorbestimmten Zeitpunkt (z.B. 17 Uhr) an jedem Tag wird der aktuelle ("heutige") Buchungstag auf den nächsten Buchungstag ("morgen") hochgesetzt.

Die Modussteuerung läuft wie folgt ab. In einem ersten Modus während des Tages verarbeiten die Verarbeitungskomponenten 314, 316 beliebige Buchungen, ohne auf den Buchungstag zu achten. Das Verarbeiten der in den eingangsseitigen Schnittstellen-Datenbanken 318, 320 enthaltenen Buchungen wird dabei entweder dadurch ausgelöst, das eine neue Buchung in die Datenbank eingestellt wird, oder erfolgt Batch-weise.

Zu einem bestimmten Zeitpunkt (z.B. 20 Uhr) an jedem Tag findet ein Moduswechsel vom ersten Modus in den zweiten Modus ("Tagesendverarbeitung") statt. Während der Tagesendverarbeitung werden von den Komponenten 314, 316 nur noch solche Buchungen ausgelesen und verarbeitet, welche den vor 17 Uhr vergebenen Buchungstag (d.h. den "heutigen") Buchungstag besitzen. Andere Buchungen hingegen, die bereits den "morgigen" Buchungstag besitzen, werden im zweiten Modus von den Verarbeitungskomponenten 314, 316 nicht ausgelesen (oder jedenfalls nicht verarbeitet). Sobald (beispielsweise anhand der Statusinformationen) festgestellt wird, dass in den Schnittstellen-Datenbanken 318, 320, 322, 324 keine Buchungen mit den "heutigen" Buchungstag mehr vorhanden sind, kann die Modus-Steuereinrichtung 330 wieder in den ersten Modus zurückschalten.

Wie die obigen Erläuterungen gezeigt haben, ermöglichen die Ausführungsbeispiele auf unkomplizierte Weise eine konsistente Sicht auf den Inhalt des Data Warehouse zu einem gewünschten Zeitpunkt. Für den Fachmann ist offensichtlich, dass die obigen Ausführungsbeispiele abgewandelt, ergänzt und modifiziert werden können, ohne dass der Schutzbereich der Erfindung, der durch die nachfolgenden Ansprüche definiert ist, verlassen wird.

## Patentansprüche

1. System (200, 300, 500) zum Beliefern eines Data Warehouse (328) mit im Rahmen einer transaktionsbasierten Verarbeitung entstandenen Daten unter Gewährleistung einer konsistenten Datensicht, umfassend:
- eine Schnittstelle (308') zum Empfangen von Datenelementen, die einzelnen Transaktionen zugeordnet sind und vor dem Einliefern in das Data Warehouse (328) einer Verarbeitung bedürfen;
- eine Ablaufsteuerkomponente (214, 308) zum Bestimmen der jeweiligen Zuordnung eines Datenelementes zu einem bestimmten Verarbeitungsvorgang und zum Steuern der Verteilung der Datenelemente auf zugehörige Verarbeitungszweige (310, 312);
- wenigstens einen stromabwärts der Ablaufsteuerkomponente (308) vorgesehenen ersten Zwischenspeicher (318, 320) zum temporären Abspeichern der verteilten Datenelemente, wobei jedem gespeicherten Datenelement Zeitsteuerinformationen zugeordnet sind;
- zwei oder mehr Verarbeitungszweige (310, 312), in denen jeweils eine Verarbeitungskomponente (314, 316) zum Verarbeiten der aus dem wenigstens einen ersten Zwischenspeicher (318, 320) ausgelesenen Datenelemente vorgesehen ist;
- wenigstens eine Modus-Steuereinrichtung (332), die in einem ersten Modus eine von den Zeitsteuerinformationen unabhängige Verarbeitung der Datenelemente veranlasst und in einem zweiten Modus eine auf den Zeitsteuerinformationen basierende priorisierende Verarbeitung bestimmter Datenelemente gewährleistet; und
- eine stromabwärts der Verarbeitungszweige angeordnete Übergabekomponente (326), welche die verarbeiteten Datenelemente an das Data Warehouse (328) übergibt.

2. System nach Anspruch 1, ferner umfassend
wenigstens einen stromabwärts der Verarbeitungszweige angeordneten zweiten Zwischenspeicher (322, 324) zum temporären Abspeichern der verarbeiteten Datenelemente.

3. System nach Anspruch 1 oder 2, **dadurch gekennzeichnet,**
**dass** jedem Verarbeitungszweig (310, 312) eine separater erster und/oder ein separater zweiter Zwischenspeicher (318, 320, 322, 324) zugeordnet ist.

4. System nach einem der Ansprüche 1 bis 3, **dadurch gekennzeichnet,**
**dass** der erste und/oder zweite Zwischenspeicher als Warteschlange ausgebildet ist.

5. System nach einem der Ansprüche 1 bis 4, **dadurch gekennzeichnet,**
**dass** der erste und/oder zweite Zwischenspeicher als Batch-Datei ausgebildet ist.

6. System nach einem der Ansprüche 1 bis 5, **dadurch gekennzeichnet,**
**dass** der erste und/oder zweite Zwischenspeicher (318, 320, 322, 324) als Schnittstellen-Datenbank ausgebildet ist.

7. System nach einem der Ansprüche 1 bis 6, **dadurch gekennzeichnet,**
**dass** pro Verarbeitungszweig mehreren Verarbeitungs-Threads ein gemeinsamer erster und/oder zweiter Zwischenspeicher (318, 320, 322, 324) zugeordnet ist.

8. System nach einem der Ansprüche 1 bis 7, **dadurch gekennzeichnet,**
**dass** den Datenelementen im wenigstens einen ersten und/oder zweiten Zwischenspeicher (318, 320, 322, 324) Statusinformationen (408) zugeordnet sind, welche den Auslesestatus der Datenelemente kennzeichnen.

9. System nach einem der Ansprüche 1 bis 8, **dadurch gekennzeichnet,**
**dass** den Datenelementen im wenigstens einen ersten und/oder zweiten Zwischenspeicher (318, 320, 322, 324) Statusinformationen (408) zugeordnet sind, welche den Verarbeitungsstatus der Datenelemente kennzeichnen.

10. System nach einem der Ansprüche 1 bis 9, **dadurch gekennzeichnet,**
**dass** den Transaktionen und/oder Datenelementen numerische Identifikatoren (402) zugeordnet sind und dass die Datenelemente sortiert nach den numerischen Identifikatoren in dem wenigstens einen ersten und/oder zweiten Zwischenspeicher (318, 320, 322, 324) enthalten sind.

11. System nach einem der Ansprüche 1 bis 10, **dadurch gekennzeichnet,**
**dass** die Ablaufsteuerkomponente (308) den über die Schnittstelle (308') empfangenen Datenelementen die Zeitsteuerinformationen zuordnet.

12. System nach einem der Ansprüche 1 bis 11, ferner umfassend
wenigstens eine stromaufwärts der Schnittstelle (308') vorgesehene Transaktionssteuerkomponente (304) zur Transaktionssteuerung in Echtzeit.

13. System nach Anspruch 12, **dadurch gekennzeichnet,**
**dass** die Ablaufsteuerkomponente (308) zur Validierung der Transaktionen und/oder der Datenelemente in Echtzeit mit der Transaktionssteuerkomponente (304) kommuniziert.

14. System nach einem der Ansprüche 1 bis 13, ferner umfassend eine Zeitgeberkomponente (330) zum Bereitstellen von Zeitsteuerinformationen.

15. Verfahren zum Beliefern eines Data Warehouse (328) mit im Rahmen einer transaktionsbasierten Verarbeitung entstandenen Daten unter Gewährleistung einer konsistenten Datensicht, umfassend:
- Empfangen von Datenelementen, die einzelnen Transaktionen zugeordnet sind und vor dem Einliefern in das Data Warehouse (328) einer Verarbeitung bedürfen;
- Bestimmen der jeweiligen Zuordnung eines Datenelements zu einem bestimmten Verarbeitungsvorgang und Steuern der Verteilung der Datenelemente auf zugehörige Verarbeitungszweige (310, 312);
- temporäres Abspeichern der verteilten Datenelemente, wobei jedem gespeicherten Datenelement Zeitsteuerinformationen zugeordnet sind;
- Verarbeiten der abgespeicherten Datenelemente in dem jeweils zugehörigen Verarbeitungszweig (310, 312), wobei in einem ersten Modus eine von den Zeitsteuerinformationen unabhängige Verarbeitung der Datenelemente erfolgt und in einem zweiten Modus eine auf den Zeitsteuerinformationen basierende priorisierende Verarbeitung bestimmter Datenelemente erfolgt; und
- Übergeben der verarbeiteten Datenelemente an das Data Warehouse (328).

16. Verfahren nach Anspruch 15, **dadurch gekennzeichnet,**
**dass** im zweiten Modus solche Datenelemente priorisiert verarbeitet werden, deren zugeordnete Zeitsteuerinformationen einen zeitlichen Schwellenwert nicht überschreiten.

17. Verfahren nach Anspruch 15 oder 16, **dadurch gekennzeichnet,**
**dass** zur Gewährleistung einer konsistenten Datensicht ein Umschalten vom ersten Modus in den zweiten Modus erfolgt.

18. Verfahren nach einem der Ansprüche 15 bis 16, **dadurch gekennzeichnet, dass** zur Gewährleistung einer zügigen Belieferung des Data Warehouse (328) ein Umschalten vom zweiten Modus in den ersten Modus erfolgt.

19. Verfahren nach Anspruch 17 oder 18, **dadurch gekennzeichnet,**
**dass** das Umschalten zwischen dem ersten Modus und dem zweiten Modus zeitgesteuert erfolgt.

20. Verfahren nach einem der Ansprüche 15 bis 16, **dadurch gekennzeichnet, dass** die Verarbeitung in den Verarbeitungszweigen (310, 312) gemäß dem Prinzip des Straight-Through-Processing erfolgt.

21. Verfahren nach einem der Ansprüche 15 bis 20, **dadurch gekennzeichnet, dass** das Verarbeiten der Datenelemente Buchungsvorgänge umfasst.

22. Computerprogrammprodukt mit Programmcodemitteln zum Durchführen des Verfahrens nach einem der Ansprüche 15 bis 20, wenn das Computerprogrammprodukt auf einem oder mehreren Computern ausgeführt wird.

23. Computerprogrammprodukt nach Anspruch 21, gespeichert auf einem computerlesbaren Datenträger.
